Europäisches Patentamt

European Patent Office

Office européen des brevets

(19)

(11) Publication number: **0 256 994 B1**

(12)

# EUROPEAN PATENT SPECIFICATION

(45) Date of publication of patent specification: **15.05.91**  (51) Int. Cl.⁵: **A01D 45/00**, A01D 47/00

(21) Application number: **87830213.2**

(22) Date of filing: **09.06.87**

(54) **Automatic picker for inflorescences grown in plantations.**

(30) Priority: **09.06.86 IT 2072786**

(43) Date of publication of application:
**24.02.88 Bulletin 88/08**

(45) Publication of the grant of the patent:
**15.05.91 Bulletin 91/20**

(84) Designated Contracting States:
**AT BE CH DE ES FR GB GR LI LU NL SE**

(56) References cited:
**AT-B- 162 462**      **US-A- 2 499 047**
**US-A- 2 524 631**    **US-A- 2 696 706**
**US-A- 3 407 581**    **US-A- 3 648 447**

(73) Proprietor: **F.E.A.M. S.r.l.**
**Viale Montecuccoli, 1**
**Dolzago Como(IT)**

(72) Inventor: **Piccinini, Augusto**
**Via Dismano, 265**
**Campiano Ravenna(IT)**
Inventor: **Pesola, Vittorio**
**Via Agno 2**
**Verona(IT)**

(74) Representative: **Adorno, Silvano et al**
**c/o SOCIETA' ITALIANA BREVETTI S.p.A. Via**
**Carducci, 8**
**I-20123 Milano(IT)**

## Description

This invention relates to an automatic picker for inflorescences grown in plantations, particularly of the type wherein the cut stems must be not longer than a predetermined length.

Mechanical pickers are known for harvesting inflorescences such as camomile and mallow and so on, wherein a front portion is provided comprising a reel rotatable in a direction opposite to the forward motion of the machine, i.e. a direction away from the ground, and equipped with pulling means such as, for instance, small hooks or, in different embodiments, paddles, fastened in various ways to the reel. A front stationary comb means, mounted on the front portion frame, at a predetermined distance away from the ground, usually 20 to 25 cm, grabs and raises the capitula or inflorescence heads which are then pulled apart from the stem by said hook or paddle means when they come into engagement with the stationary comb means. The inflorescences pulled free in such a way are then dropped towards the back area of the machine in order to be forwarded, for example by means of a screw feeder, to suitable containers.

However, these known pickers provide unsatisfactory results, with a substantial loss of product, mainly because of the clogging effect continuously undergone by the stationary comb means subjected to a build-up on the tines thereof, of a bulk of vegetable materials, which besides have been roughly and non-uniformly pulled and are often frayed. Attempts have been made to add a shearing blade underneath the stationary comb, without resulting in improvements worthy of note.

These known pickers have been used so far with a low unit efficiency of the crops, corresponding to the waste of product being left on the ground and to the damage suffered by the product during picking. Said drawbacks and the associated economic losses are even more substantial where the cultivation is rather intensive than extensive and the crops have a higher unit value due to the limited yield and to the cost of labour. In these cases in particular it is important to reach as high an efficiency as possible, keeping product wastes to a minimum.

From US-A-3 648 447 it is known a machine according to the preamble of claim 1 which has been designed for harvesting fruit on relatively low plants but without giving the assurance that the cut stems have all an approximate equal length, as there is no need for such an effect in this case.

Therefore, the object of this invention is to provide an automatic inflorescence picker of the kind mentioned above, which is not only capable of reaching a high percentage of cropped product with the least possible wastage, but also giving in addition an end product wherein the sheared stem remaining attached to the inflorescence has a length as uniform and predetermined as possible.

These objects are achieved through a machine also having the features of the preamble of claim 1 and characterized in that the tines of the comb means are adapted to pull from the ground inflorescences grown in plantations, with vertical flanges all fastened to the central shaft at uniformly spaced apart positions; that shearing means and counterblade bars are provided, said shearing means being adjustably mounted on the front part of the machine frame in order to come into engagement tangentially with said counterblade bars which are fixed to the stiffening bars and comb bars; that each counter-comb means is arranged to have a motion directed from base to tip of the associate tine of the comb means, and viceversa, during the rotation of the reel, whereby the tines are swept free of the picked products caught therebetween after the shearing operation, as each counter-comb means is pivoted on respective one of said flanges by means of links which are able to oscillate all together through a predeterminated angle relative to said flanges, going back to a starting position under the action of resilient means.

According to a preferred embodiment of the present invention, additional resilient means are further provided to urge against a steel bar fastened to each comb means and having the function of a counterblade. The blades forming the shearing means, which are preferably non-continuous but include a plurality of adjacent members, in a particularly preferred embodiment are further provided, upstream of the shearing area, with an adjustable spacing roll adapted to set back the blade momentarily while said counterblade is approaching, in order to avoid a troublesome interference while enabling the only desirable tangential friction action between blade and counterblade.

According to additional, preferred features of this invention, said counter-comb bar support llinks comprise mutually parallel and integrally fastened arms, each arm comprising mutually facing pairs of confronting brackets at each inner flange, one on each side of said flange, and made integral by means of fastening bolts, while at each outer flange said arm is formed as a single bracket adjacent to the inner side of the respective flange, all the inner and outer arms being pivoted on a single axis, while the brackets forming the outer arms are provided with a bent arm inserted through an opening in the associated flange and reaching the outside with a surface which, at each complete revolution of the reel, comes into engagement with a matching surface of a stationary element fastened to the frame, one of said surfaces being cylindrical while the other is cam-shaped in order to cause the counter-comb to move from the starting position and to spring back to the same position, so that the corresponding comb means is swept free from the product that has built up between the tines thereof. Since a pair of outer arms or brackets are provided for each comb means or counter-comb, at each revolution of the reel the number of springing or snapping motions will be identical to the number of comb means provided on the reel.

These and other objects, features and advantages of the mechanical picker according to this invention will become apparent to those skilled in the art from the following detailed description of a preferred embodiment described as a non-limiting example thereof, with reference to the attached drawings, wherein:

FIGURE 1 is a schematic side elevation of the picker according to this invention, together with the self-propelled means associated therewith;

FIGURE 2 shows a schematic cross-sectional view of the head portion of the machine, during operation thereof;

FIGURE 3 shows a similarly schematic front view of the machine head portion of Fig. 2 wherein the frame has been omitted, i.e. showing only the picking reel;

FIGURES 4 and 4a show a more detailed perspective view of some of the reel components taken apart from each other, as well as some of the shearing members, and respectively a sectional view taken across the latter, along line IVa-IVa;

FIGURE 5 shows a partial cross-sectional view of an end portion of the reel, taken along an axial plane thereof, with an enlarged detail on the side;

FIGURE 6 shows a partial cross-sectional view taken along line VI-VI of Fig. 5;

FIGURE 7 shows, in an enlarged detail view, the same detail A of Fig. 2, concerning the shearing area; and

FIGURE 8 shows a still partial sectional view, taken along reference line VIII-VIII of Fig. 7.

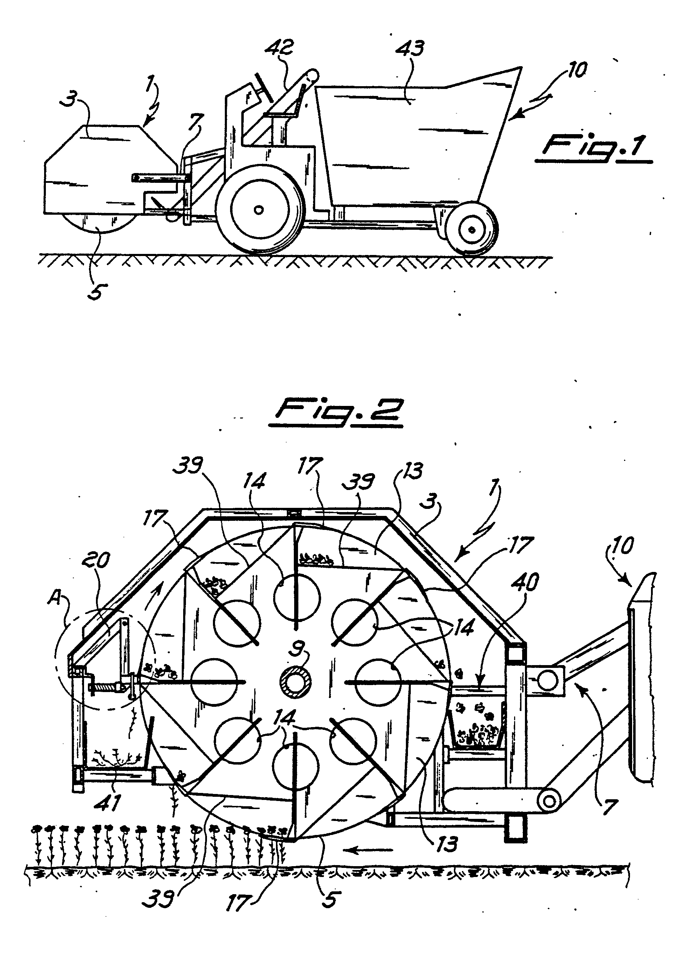

Referring now to the drawings, and in particular to Figs. 1 and 2, the machine according to this invention includes substantially a picker head portion shown at 1, which comprises a frame 3 having rotatably mounted therein a cylindrical reel 5, and being in turn adjustably suspended by means of pivoted linkages 7 from a self-propelled vehicle 10 preferably including a container body 43 which is loaded for example by means of a conveyor belt 42, as it will be explained in more detail in the following. A main engine (not shown) mounted on vehicle 10 drives a hydraulic motor, not shown as well, whereby pressurized fluid is conveyed at a variable pressure to a plurality of hydraulic pumps, one of said pumps being engaged on the reel main shaft 9, supported for rotation at the ends thereof on bearings (not shown) on frame 3, which frame is preferably made up of tubular rods. The ends of shaft 9 are preferably formed with end stubs 11 (see Figs. 3 and 5) adapted to receive the actuating drive from the hydraulic pump and, if provided, from belt and pulley transmissions, to set further parts in motion.

On main shaft 9 there is mounted a predetermined number of disc-shaped flanges 13, uniformly spaced from each other, fastened by bolts on corresponding hubs 15, made integral to shaft 9 e.g. by means of welding (see Fig. 5). Said flanges 13 which in the embodiment shown herein are a total number of four (the two outermost flanges being shown at 13'), are provided on the surface thereof with lightening apertures 14, which are for example in number of eight as shown in Fig. 2, said flanges being connected to each other by means of longitudinal L-shaped steel sections or bars 12 which are fastened in uniformly spaced positions on the outer circumference of flanges 13, as it is best seen in Fig. 4.

To each of said bars 12, also shown in number of eight, there is fastened, such as by means of bolts, a second bar 16, preferably of aluminum, bearing a plurality of parallel and closely spaced tines 17a, thereby forming a comb-like structure 17. Tines 17a, preferably of spring steel, can be advantageously inserted through openings along the outer edge of bar 16, and bonded therein by means of an adhesive. A length of said tines, e.g. 10 cm, will be protruding outwards and the mutual distance between the tines will be about 4 mm, the tines being slightly angled towards the inside of the cylinder defined by reel 5, of an angle preferably not larger than about $15°$. Along the outer periphery of reel 5 there is then provided a predetermined number of longitudinal comb means, uniformly spaced from each other, and preferably, although not necessarily, in a total number of eight, extending along the whole length of the reel, parallel to the longitudinal shaft 9 thereof, between the two end flanges 13'. To the outer surface of the bar 16 of each comb means there is fastened a further bar 18, preferably of quality steel, whose function will be explained in the following.

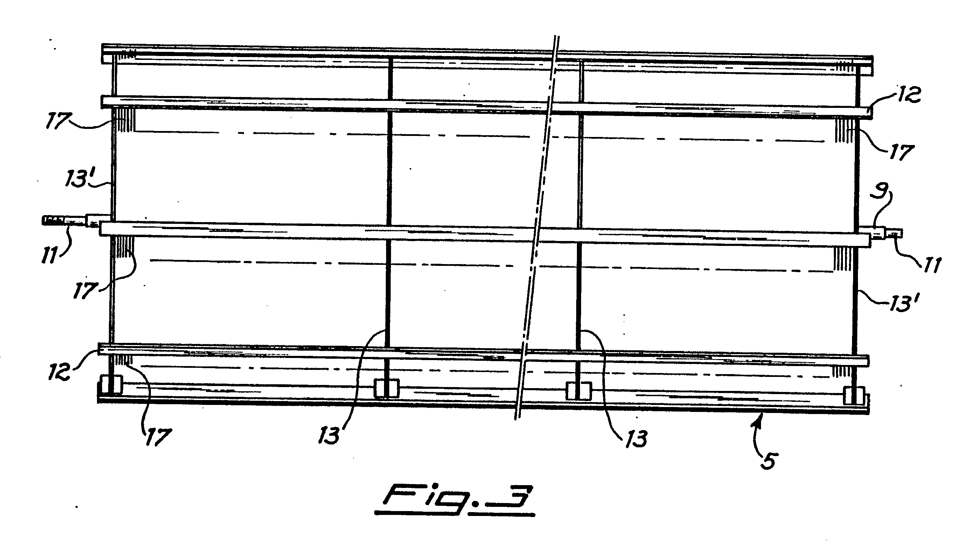

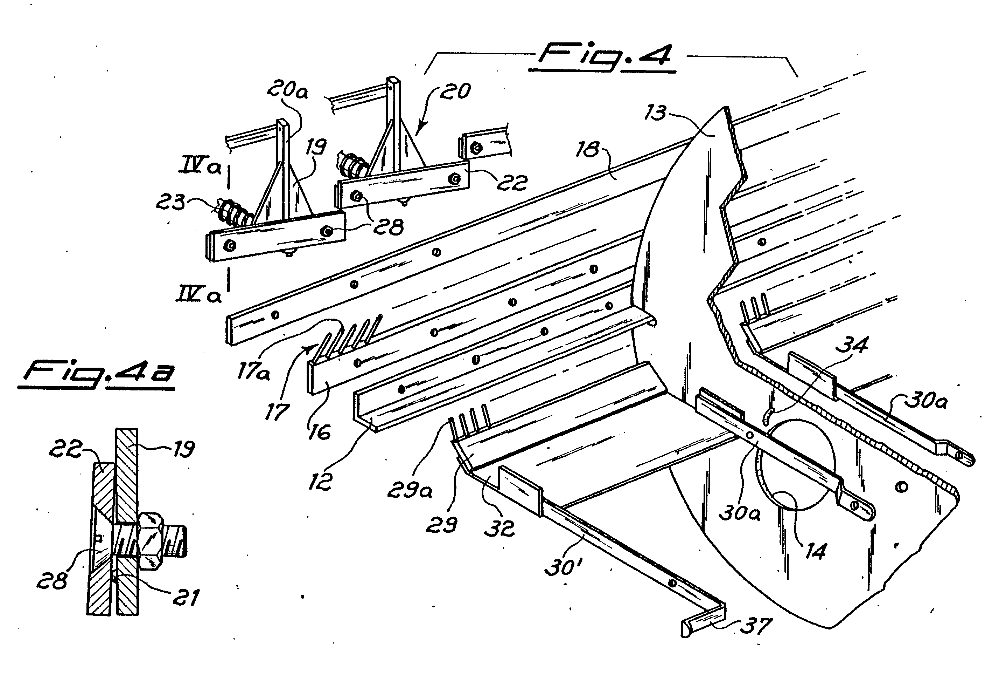

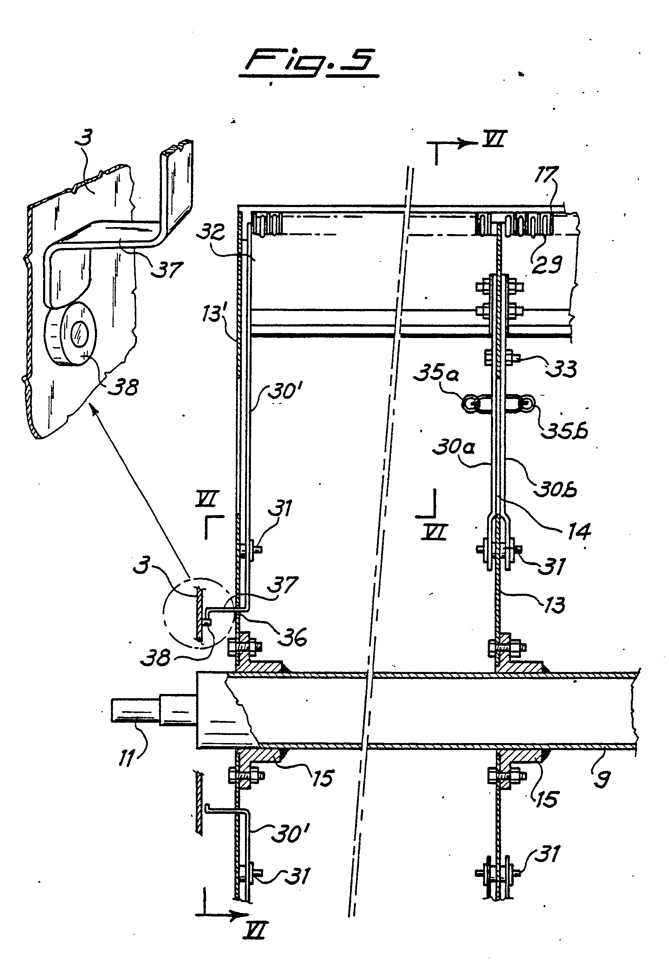

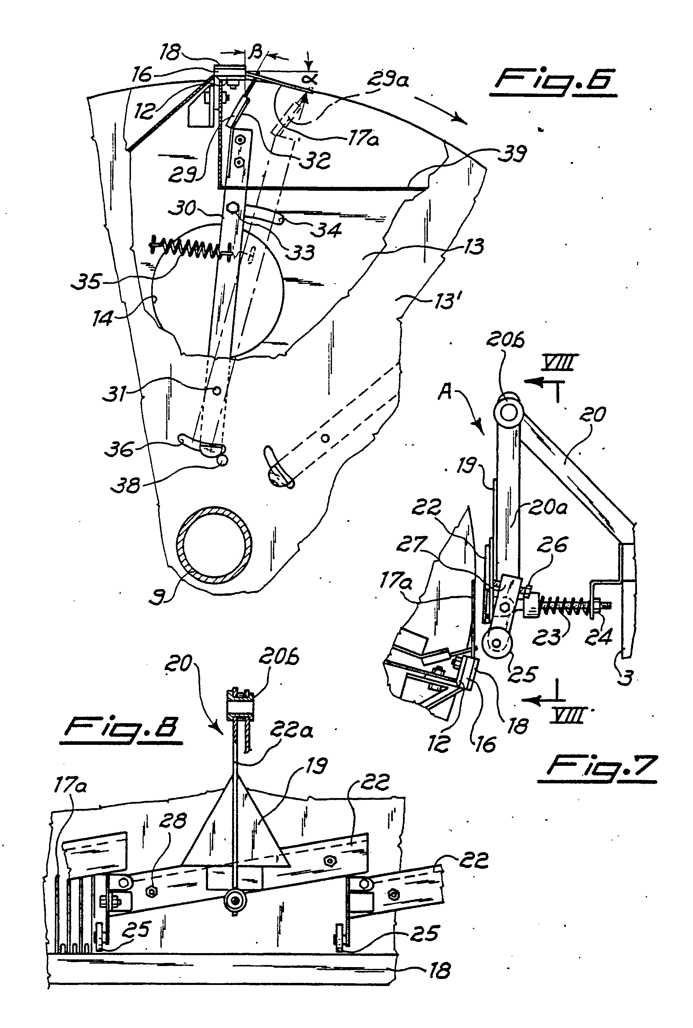

On frame 3, in the position facing the horizontal axial plane of reel 5, or in other words corresponding to the most advanced location reached by comb means 17 as the reel rotates, there is mounted a plurality of shearing devices adjacent to each other, so arranged as to cover the whole length of the machine head, or better of comb means 17. They are preferably provided as support structures 20 pivoted on the frame, each carrying a blade 22 mounted on a triangular support member 19 and fastened by screws, preferably in a slightly tilted position relative to the horizontal, as it is seen in Figs. 4 and 8, in order to allow for a better shearing action, similar to the one performed by the blades of a pair of scissors. It is important that no gap is left between a shearing device and the adjacent one, the total number thereof being for instance ten. In addition, as it is seen in Fig. 4a, each blade 22 preferably forms an angle also with the vertical plane, spacer dowels 21 being provided on the triangular support bracket 19, below fastening screws 28 shown as socket head screws, whereby said angle can be asjusted. As it should be noted, vertical strut 20a of each support structure 20 having the bracket 19 fastened thereon is pivotedly mounted with its upper end at 20b on said support structure, while the lower end thereof is movable relative to frame 3, as it is connected thereto by means of a spring 23, which is adjustable through a screw 24. Below the shearing area, a roll 25 is mounted on said strut 20a for example by means of a bracket 27 to be adjusted by a set screw 26.

With such an arrangement, when a comb means 17 is approaching the shearing area through a rotation being always in an upward direction, the inwardly angled position of tines 17a prevents the tips thereof from engaging the blade 22, while against the latter would impinge the upper edge of counter-blade 18 if this did not abut first against roll 25 and push it back against the bias of spring 23, due to rotation of strut 20a around pivot pin 20b. Therefore at the same time blade 22 moves backwards and, while counter-blade 18 keeps rising, the engagement between the latter and roll 25 is gradually released while an engagement is gradually and uniformly generated between counter-blade 18 and blade 22. To that end, the positioning of roll 25 will be adjusted by means of set screw 26 so that, when counter-blade 18 starts coming into engagement with blade 22, the latter is at the right distance to provide the desired sliding friction engagement, i.e. shearing edge of blade 22 will have to be oriented according to the tangent line to the circumference described by counter-blade 18. Said position will be further maintained through the bias of spring 23, adjustable by means of tightening screw 24.

Associated with each comb means 17 there is further provided a counter-comb bar 29 fastened to a certain number of radial arms 30 parallel to each other, and pivoted on flanges 13 through pivot pins 31 along an axis parallel to the shaft 9. Each bar 29, having the same length as comb bars 16, bears a plurality of tines 29a preferably of spring steel as well, but shorter than comb tines 17a interleaved therewith. Counter-comb tines 29a may similarly be fitted through apertures provided in the aluminum bar 29 and bonded therein by means of an ashesive, and they form with the arm 30 supporting bar 29 an angle $\beta$ of about 20-25° in the reel rotating direction (see Fig. 6). Bar 29 is fastened for instance by means of screws, to a plate 32 connecting the upper ends of arms 30 together. The latter, which may also be defined as links, are designed in such a way as to enable them to perform an oscillating motion with respect to flanges 13 whereon they are pivoted at 31 and, as it is best seen in Fig. 5, they comprise two coupled brackets 30a, 30b at each inner flange 13, and a simple bracket 30' at the outer flanges 13'. As to the inner links 30, the pair of brackets 30a and 30b respectively left and right, are fastened to each other both by plate 32 and by pivot pin 31 at the opposite end, and further by an intermediate through bolt 33, inserted through an arc-shaped slot 34 of flange 13, in order to enable the aforesaid oscillating motion to take place as it will be described in the following. Each bracket 30a and 30b is further connected to the corresponding flange 13 by means of a spring 35a, 35b, as it is shown in Figs. 5 and 6, at an intermediate position between fastening bolt 33 and pivot pin 31. Arms or links 30' associated to outer flanges 13' (only the leftmost one is shown in Fig. 5, but the same is true symmetrically for the right side) are comprised of a single bracket, adjacent to the inner side of flange 13' whereon they are as well pivoted about an axis 31 which can also be formed as a spindle connecting to each other all the pivot points associated to the same counter-comb, or else it is simply a separate pivot pin aligned to the same axis of rotation of all the other pivot pins 31 associated to the arms of the same counter-comb bar 29 (as shown in Fig. 5). It should be noted that arm 30' does not end at pivot pin 31, but extends further for a length towards the reel axis, whereupon it bends outwardly protruding, at a free end 37 thereof, across a through opening 36. On both sides of frame 3, close to the ends 11 of shaft 9, there is fastened a member 38 (only the left one is visible in Fig. 5) having a surface against which there rolls at regular intervals the associate surface of end 37 of each outer arm 30', as reel 5 rotates. One of said surfaces, such as the surface of end 37 shown in the detail of Fig. 5, is cam shaped, the other being perfectly cylindrical. Advantageously, in the example shown, member 38 can be a simple bearing. The eccentricity of one of the two surfaces coming into mutual engagement at regular intervals causes a relative displacement between flanges and arms, made possible by the particular arc-shaped configuration of slots 34 and 36. The pivotal connection at 31 converts said motion into a revolution about this axis, along an arc preferably of about 15°. Said revolution takes place simultaneously for all the arms associated to the same counter-comb 29, made integral to each other as it was explained hereinabove, against the biasing force of springs 35 provided on the inside arms.

In Fig. 6 there is shown in broken line a position wherein a counter-comb 29 and arms thereof, springs 35 being in tension, have moved apart from a starting position shown in full line, to which position the whole counter-comb system will snap back to, as soon as ends 37 on both sides of the reel are no longer engaging against stationary abutments 38. It should be noted that the angular position of the latter is such as to cause the aforesaid counter-comb motion when the latter, together with the associated comb means have left the shearing area before reaching the top position of their path. Therefore, if the comb means and counter-comb are in a total number of eight on the reel, as it was assumed before, at each angle of rotation 360°:8 = 45° there will be a snapping actuation of the counter-comb which in turn comes to take the top position in the reel.

It should also be noted that, for each reel section defined by disc shaped flanges 13, there will advantageously be provided a certain number of inner collecting areas connected to each other, and defined for instance by a plate 39 fastened to each L-shaped section 12, and extending inwardly for a predetermined length whereupon it turns by 90° degrees until it meets the following section 12. In this way, a continuous plurality of containers is provided, which have a triangular cross-section and are adapted to gather the picked inflorescences and to drop them into underlying containers or conveyors 40.

The operation of the machine according to this invention as described above is as follows.

Once the height of head portion 1 has been adjusted by means of pivoted links 7 according to the kind of inflorescences to be picked, the self-propelled means 10 is started also in order to cause reel 5 to rotate in the direction of the arrows shown in Fig. 2, anyway always in a direction away from the ground starting from the closest position thereto in the forward direction of the self-propelled means. During said rotation, comb means 17 come in turn into engagement with the inflorescences and pull the latter while retaining them below the capitulum thereof, which is caught between the tines, while the underlying stem portion will be kept facing outwards as it is shown in Fig. 2. After having travelled approximately a quarter of a revolution, the inflorescences are carried to the shearing area and, before they reach there, counter-blade 18 made integral with comb means 17 engages spacer rolls 25 of all the shearing means for proper positioning of blades 22, the adjustment of all screws 26 having previously been performed. In this way, a friction contact is established between blade 22 and counter-blade 18 being flush to each other, under the bias of springs 23 properly tensioned by means of nuts 24, with the consequent shearing of the stems therebetween, at a distance apart from the capitulum which can be correctly predetermined through the aforesaid adjustments and the sizing of bars 16 and 18. The sheared parts of the stems can be collected in an underlying container or conveyor 41 discharging them laterally to the outside. While the reel continues to rotate, ends 37 of outer arms 30' belonging to the same counter-comb associated with the comb means which carries, between its tines, the inflorescences whose stems have just been cut, start coming into engagement with stationary abutments 38, whereby the tines of counter-comb 29 come to sweep the areas intermediate between tines of associated comb means 17 reverting then back to the starting position under the bias of springs 35. In this way, the inflorescences caught between tines 17a, also due to the inward sloping thereof (angle α), are pushed out under the action of counter-comb tines 29a and fall inside the reel, being possibly collected in the underlying container section 39. This action is substantially carried out in the upper quarter of a turn made by the comb means, after the same has come into engagement with shearing means 20, and one can assume it is completed as soon as the top position has been reached, so that the inflorescences cannot be ejected to the outside by the action of the counter-combs, what is avoided by proper positioning of abutments 38 and making the arm ends 37 to come into engagement with said abutments in such a way as to be oscillated through approximately 15°, while the reel rotates through the same angle. It should be noted that, rather than the counter-combs mentioned and shown above, other means may be provided to free the comb tines from inflorescences remaining therebetween after the shearing operation. A brush with bristles of plastics may for example be provided at the rear side of the reel and fastened to the frame so as to come into engagement with the combs along their downstroke from the top position. Provision may be made for said brush to rotate in a direction opposite to the reel whereby the comb tines are effectively swept free by the brush, from the inflorescences possibly still caught therebetween. Whichever means being used to take them out from between the tines of the comb means 17, the inflorescences contained in sections 39 will fall therefrom before starting the lower half turn, and they will be collected in underlying container means 40, preferably comprising conveyor belts adapted to convey the collected product, e.g. to a large container body 43 mounted on the self-propelled means 10, through a conveyor-elevator belt 42 (Fig. 1) fed by conveyor 40.

It should eventually be noted that the hydraulic pump provided to rotatory drive the head portion of the machine, through a hydraulic motor mounted on the latter, is preferably a variable speed pump, which enables the rotation rate of the head portion to be controlled. Said control will be performed, in a way per se known, from the driving post on the self-propelled means, as a function of the vehicle forward moving speed which is in turn a function of the density of inflorescences per unit area of the ground, humidity content of said inflorescences and therefore higher or lower resistance to pulling thereof. Making proper use of the above features a high yield crop can be obtained, while proper control is also achieved of the stem length left under the capitula, certainly reaching a length shorter than the limits required by law for certain types of inflorescences, such as camomile, whereby a top quality product is provided.

## Claims

1. A machine for automatic picking of inflorescences grown in plantations, including a head portion (1), towed and powered by a self-propelled means (10), and provided with a cylindrical reel (5) having a central shaft (9) rotatably mounted on a frame (3) whose position is adjustable relative to the ground through adjusting means (7) controllable from the self-propelled means, said reel (5) substantially comprising: a plurality of parallel disc-shaped vertical flanges (13, 13'), peripherally stiffened by longitudinal bars (12) being parallel to said shaft and uniformly distributed along the reel circumference, on each of said bars (12) there being provided comb means (16, 17) whose tines (17a) can pull the products to be picked; counter-comb means (29) which are adapted to come into engagement with said comb means (17) by interleaving between the tines (17a) thereof; cut product collecting means (39) adapted to gather during reel (5) rotation the picked products; and conveyor and container means (40, 42, 43) adapted to receive the product from said collecting means (39), characterized in that the tines (17a) of the comb means are adapted to pull from the ground inflorescences grown in plantations, the flanges (13, 13') are all fastened on said central shaft (9) at uniformly spaced apart positions; there being further provided shearing means (20, 22) and counterblade bars (18), said shearing means being adjustably mounted on the front part of the frame (3) in order to come into engagement tangentially with said counterblade bars (18) which are fixed to said stiffening bars (12) and comb bars (16); said counter-comb means comprising a bar (29) provided with tines (29a) matching the tines (17a) of said comb means (16,17) so as to interleave with them, and being arranged to have a motion directed from base to tip of said tines (17a) and vice versa during the rotation of the reel (5), whereby these tines are swept free of the picked products caught therebetween after the shearing operation as each counter-comb means is pivoted on respective one of said flanges (13, 13') by means of links (30) which are able to oscillate all together through a predetermined angle relative to said flanges, going back to a starting position under the action of resilient means (35).

2. A picking machine according to claim 1, characterized in that said links pivotally mount said bars (29) of the counter-comb means to the respective flanges (13, 13') and comprise mutually parallel and integrally fastened arms (30).

3. A picking machine according to claim 1 or 2, characterized in that said shearing means comprises a plurality of blades (22) adjacent to each other, in order to cover, without interruptions, the same length as each comb means (17), each blade being rigidly fastened onto an arm (20a) having one end (20b) thereof pivoted on a stationary structure (20) made integral with frame (3), the other end of said arm being biased towards the reel periphery, under the action of adjustable resilient means (23).

4. A picking machine according to claim 3, further including for each structure (20) a roll (25) adjustably positioned on said arm (20a) and upstream of said blade (18) when seen in the direction of rotation of the reel (5), said roll being adapted to come into engagement with said counterblade outer bar (18) before it engages with said blade (22), whereby the latter is made to back up and it is properly positioned for the shearing operation, under the bias of said resilient means (23).

5. A picking machine according to claim 2, wherein said arms (30) at the inner flanges (13) comprise mutually facing pairs of confronting brackets (30a, 30b) on each side of the associated flange, made integral to each other, and respectively at the outer flanges (13') single brackets (30') adjacent to the inner side of the associated flange, said double and single brackets being all pivoted on the respective flange (13, 13') at aligned locations (31), thus defining an oscillation axis parallel to said central shaft (9), an arc-shaped slot (34, 36) being provided in each flange (13, 13') as a seat for said oscillation.

6. A picking machine according to claim 5, wherein each of said outer brackets (30') extends radially for a certain length beyond said axis (31) towards the reel rotational axis, continuing further with an outwardly bent elbow-shaped end (37) being adapted to come into engagement, at each complete revolution of reel (5), with a stationary abutment (38) made integral with frame (3), in order to cause said unitary rotation of all arms (30) relative to the flanges associated therewith, and consequently of the counter-comb bar (29), in the meantime loading said resilient means (35) for biasing the system of arms (30) and counter-comb (29) back to the starting position, upon disengagement of said arm ends (37) from said abutments (38).

7. A picking machine according to claim 6, wherein one of the surfaces of said arm end (37) and of said abutment (38), adapted to engage with each other is cam-shaped, with a variable bending radius, the other surface being perfectly cylindrical.

8. A picking machine according to claim 1, wherein the tines (17a) of each comb means (17), all parallel to each other, are angled inwardly of the circumference described by the periphery of reel (5), by an angle ($\alpha$) of less than 15°.

9. A picking machine according to claim 2, wherein each one of the tines (29a) of each counter-comb (29) whose bar is fastened integral with arms (30) by means of a plate (32), one for each flange (13), forms with the corresponding arm (30) an angle ($\beta$) of about 20-25°.

10. A picking machine according to one or more of the preceding claims, wherein blades (22) of each shearing means, located substantially in a position facing the median front generating line of the cylinder formed by the periphery of reel (5), are all inclined of the same angle in a vertical plane in order to allow for a scissor shearing action upon friction against said counter-blade (18).

11. A picking machine according to claim 10, wherein said blades (22) are each supported by a triangle bracket (19) fastened to said arm (20a) with an adjustable angular sloping to the vertical plane.

12. A picking machine according to claim 1, wherein each of said collecting means (39) is comprised, for each section of cylindrical reel (5), of a plate fastened at one side to said bar (12) and extending inwardly for a length whereupon it bends at right angle until it meets next bar (12) to which the second end thereof is fastened so that, for each reel section included between two adjacent flanges (13) there is formed a continuous series of triangular cross-section containers adapted to collect the inflorescences sheared by said shearing means, and swept out by said counter-comb means during reel (5) rotation.

13. A picking machine according to claim 12, including a container body (43) mounted on said self-propelled means (10) and supplied by means of a conveyor-elevator-belt (42), adapted in turn to receive on a belt conveyor (41) the collected product falling from said means (39).

## Revendications

1. Machine pour la cueillette automatique de fleurs cultivées dans des plantations, comprenant une partie de coupe (1) attelée à un engin automoteur (10) dont elle reçoit son énergie motrice et pourvue d'un rabatteur cylindrique (5) comportant un arbre central (9) monté à rotation sur un bâti (3) dont la position est réglable par rapport au sol à l'aide de moyens d'ajustement (7) commandés depuis l'engin automoteur, comprenant essentiellement: plusieurs flasques verticaux parallèles en forme de disque (13, 13'), raidis à leur périphérie par des barres longitudinales (12) parallèles audit arbre, chacune desdites barres (12) portant un peigne (16, 17) dont les dents (17a) peuvent attirer les produits à cueillir; des contre-peignes (29) qui sont agencés de façon à entrer en prise avec les peignes (17) en s'intercalant entre les dents (17a) de ceux-ci; des moyens collecteurs (39) des produits coupés agencés de façon à recueillir les produits cueillis au cours de la rotation du rabatteur (5); et des moyens transporteurs et récepteurs (40, 42, 43) agencés de façon à recevoir les produits en provenance desdits moyens collecteurs (39), caractérisée en ce que les dents (17a) des peignes sont agencées de façon à attirer depuis le sol les fleurs cultivées en pleins champs, en ce que les flasques (13) 13') sont tous fixés sur ledit arbre central (9) dans des positions espacées uniformément, en ce qu'il est en outre prévu des moyens de cisaillement (20, 22) et des barres formant contre-lame (18), ces moyens de cisaillement étant montés réglables sur la partie avant du bâti (3) de façon à entrer tangentiellement en prise avec lesdites barres formant contre-lame (18) qui sont fixées auxdites barres de raidissement (12) et aux barres (16) des peignes, lesdits contre-peignes comprenant une barre (29) munie de dents (29a) qui correspondent aux dents (17a) desdits peignes (16, 17) de manière à s'intercaler entre celles-ci et qui sont agencées de façon à effectuer un mouvement dirigé de la base à la pointe desdites dents (17a) et vice versa au cours de la rotation du rabatteur (5), d'où il résulte que ces dents sont débarrassées par balayage des produits cueillis saisis entre elles à la suite de l'operation de cisaillement, tandis que chaque contre-peigne pivote sur un flasque respectif (13, 13') sous l'action de bielles (30) qui sont en mesure d'osciller toutes ensemble d'un angle prédéterminé par rapport auxdits flasques, pour revenir dans une position initiale sous l'action de moyens à ressort (35).

2. Machine à cueillir selon la revendication 1, caractérisée en ce que lesdites barres (29) des contrepeignes sont montées pivotantes sur les flasques respectifs (13, 13') au moyen desdites bielles qui comprennent des bras (30) parallèles et fixés d'une seule pièce entre eux.

3. Machine à cueillir selon la revendication 1 ou 2, caractérisée en ce que lesdits moyens de cisaillement comprennent plusieurs lames (22) mutuellement adjacentes de manière à couvrir sans interruption la même longueur que chaque peigne (17), chaque lame étant fixée rigidement sur un bras (20a) dont une extrémité (20b) est montée pivotante sur une structure fixe (20) formée d'un seul tenant avec le bâti (3), l'autre extrémité dudit bras étant sollicitée vers la périphérie du rabatteur sous l'action de moyens à ressort réglables (23).

4. Machine à cueillir selon la revendication 3, contenant en outre, pour chaque structure (20), un galet (25) disposé de façon réglable sur ledit bras (20a) et en amont de ladite lame (18) en considérant le sens de rotation du rabatteur (3), ce galet étant agencé de façon à entrer en prise avec la barre extérieure formant contre-lame (18) avant qu'il n'entre en prise avec ladite lame (22), de telle sorte que cette dernière soit soutenue et qu'elle soit placée dans la position correcte pour l'opération de cisaillement sous l'action desdits moyens à ressort (23).

5. Machine à cueillir selon la revendication 2, dans laquelle lesdits bras (30) comprennent, au niveau des flasques internes (13), des paires en regard l'une de l'autre de pattes (30a, 30b) placées en vis-à-vis de part et d'autre du flasque associé, unies d'un seul tenant l'une à l'autre et, au niveau des flasques externes (13'), des pattes uniques (30') adjacentes à la face interne du flasque associé, ces pattes doubles et simples étant toutes montées pivotantes sur le flasque (13, 13') associé en des points alignés (31), définissant ainsi un axe d'oscillation parallèle audit arbre central (9), une fente en arc de cercle (34, 36) étant formée dans chaque flasque (13, 13') en tant que siège pour ladite oscillation.

6. Machine à cueillir selon la revendication 5, dans laquelle chacune desdites pattes extérieures (30') s'étend radialement sur une certaine longueur au-delà dudit axe (31) en direction de l'axe de rotation du rabatteur, se poursuivant par une extrémité coudée courbée vers l'extérieur (37) qui est agencée de façon à entrer en prise, à chaque tour complet du rabatteur (5), avec une butée fixe (38) formée d'un seul tenant avec le bâti (3), afin de produire ladite rotation commune de tous les bras (30) par rapport aux flasques qui leur sont associés et, en conséquence, de la barre de contrepeigne (29), lesdits moyens à ressort (35) étant entretemps tendus pour qu'ils aient tendance à ramener le système de bras (30) et de contre-peigne (29) dans la position initiale au moment où lesdites extrémités (37) des bras perdent le contact avec lesdites butées (38).

7. Machine à cueillir selon la revendication 6, dans laquelle l'une des surfaces de ladite extrémité (37) du bras et de ladite butée (38) agencées de façon à entrer en contact l'une avec l'autre a une forme de came à rayon de courbure variable, l'autre surface étant parfaitement cylindrique.

8. Machine à cueillir selon la revendication 1, dans laquelle les dents (17a) de chaque peigne (17), toutes parallèles entre elles, sont coudées vers l'intérieur de la circonférence décrite par la périphérie du rabatteur (5), d'un angle ($\alpha$) de moins de 15°.

9. Machine à cueillir selon la revendication 2, dans laquelle chacune des dents (29a) de chaque contre-peigne (29), dont la barre est fixée rigidement aux bras (30) au moyen d'une plaque (32), une pour chaque flasque (13), forme avec le bras (30) correspondant un angle (ß) d'environ 20-25°.

10. Machine à cueillir selon l'une quelconque des revendications 1 à 9, dans laquelle les lames (22) de chacun des moyens de cisaillement, situées essentiellement dans une position où elles font face à la génératrice avant médiane du cylindre formé par la périphérie du rabatteur (5), sont toutes inclinées du même angle dans un plan vertical, afin de produire l'effet de cisaillement de ciseaux en frottant contre ladite contre-lame (18).

11. Machine à cueillir selon la revendication 10, dans laquelle lesdites lames (22) sont supportées chacune par un support en équerre (19) fixé audit bras (20a) avec une inclinaison angulaire réglable par rapport au plan vertical.

12. Machine à cueillir selon la revendication 1, dans laquelle chacun des moyens collecteurs (39) est constitué, pour chaque section du rabatteur cylindrique (5), par une plaque fixée à l'un des côtés d'une barre de raidissement (12) et s'étendant vers l'intérieur sur une certaine longueur, après quoi elle est coudée à angle droit jusqu'à ce qu'elle atteigne la barre de raidissement (12) suivante à laquelle sa seconde extrémité est fixée, de telle sorte que pour chaque section du rabatteur comprise entre deux flasques (13) voisins, il soit formé une série continue de récipients de section triangulaire propres à recueillir les fleurs coupées par lesdits moyens de cisaillement et détachées par lesdits contre-peignes au cours de la rotation du rabatteur (5).

13. Machine à cueillir selon la revendication 12, comprenant un bac de réception (43) monté sur ledit engin automoteur (10) et alimenté au moyen d'un tapis transporteur-élévateur (42) agencé de façon à recevoir à son tour, sur une bande transporteuse (41), le produit recueilli qui tombe desdits moyens collecteurs (39).

**Ansprüche**

1. Maschine zum automatischen Pflücken von auf Plantagen wachsenden Blütenständen welche einen von einem Selbstantriebsmittel (10) geschleppten und angetriebenen Kopfteil (1) enthält, der mit einer zylindrischen Trommel (5) mit einer zentralen Welle (9) versehen ist, die drehbar auf einem Rahmen (3) montiert ist, dessen Position gegenüber dem Boden mittels vom Selbstantriebsmittel steuerbarer Einstellmittel (7) verstellbar ist, welche Maschine im wesentlichen umfaßt: eine Mehrzahl von parallelen scheibenförmigen vertikalen Flanschen (13, 13'), die durch zur Welle parallele Längsbalken (12) in Umfangsrichtung versteift sind, wobei auf jedem Stab (12) Kammittel (16, 17) vorgesehen sind, deren Zähne (17a) zum Rupfen der zu pflückenden Produkte ausgelegt sind; Gegenkammittel (29) zum Ineingriffkommen mit den Kammitteln (17) durch Verzahnen mit den Zähnen (17a) derselben; Sammelmittel (39) für das geschnittene Produkt zum Einsammeln der gepflückten Produkte während der Rotation der Trommel (5); und Förder- und Behältermittel (40, 42, 43) zur Übernahme des Produkts von den Sammelmitteln (39), dadurch gekennzeichnet, daß die Zähne (17a) der Kammittel zum Ausziehen von auf Plantagen wachsenden Blütenständen aus der Erde ausgelegt sind, die Flansche (13, 13') alle auf der zentralen Welle (9) an gleichmäßig voneinander entfernten Stellen befestigt sind; wobei weiters Schermittel (20, 22) und Gegenschneidbalken (18) vorgesehen sind, welche Schermittel auf dem Vorderteil des Rahmens (3) zwecks tangentialen Ineingriffkommens mit den an den Versteifungsbalken (12) und den Kammbalken (16) befestigten Gegenschneidbalken (18) verstellbar montiert sind; wobei die Gegenkammittel einen mit zu den Zähnen (17a) der Kammittel (16, 17) zwecks Verzahnens mit diesen passenden Zähnen (29a) versehenen Balken (29) umfassen und so angeordnet sind, daß sie während der Rotation der Trommel (5) von der Basis zu den Spitzen der Zähne (17a) und umgekehrt bewegt werden, wodurch diese Zähne von den gepflückten Produkten, die sich nach dem Schervorgang zwischen ihnen gefangen haben, befreit werden, wenn jedes Gegenkammittel am jeweiligen Flansch (13, 13') mittels Verbindungsstücken (30) verschwenkt wird, die alle zusammen um einen bestimmten Winkel zu den Flanschen oszillieren können und unter der Wirkung von Federmitteln (35) in eine Ausgangslage zurückgehen können.

2. Pflückmaschine nach Anspruch 1, dadurch gekennzeichnet, daß die Verbindungsmittel die Balken (29) der Gegenkammittel an den jeweiligen Flanschen (13, 13') schwenkbar lagern und zueinander parallele und integral befestigte Arme (30) aufweisen.

3. Pflückmaschine nach Anspruch 1 oder 2, dadurch gekennzeichnet, daß das Schermittel eine Mehrzahl von nebeneinanderliegenden Schneiden (22) umfaßt, sodaß sie ohne Unterbrechung dieselbe Länge wie die Kammittel (17) überdecken, wobei jede Schneide starr an einem Arm (20a) befestigt ist, dessen eines Ende (20b) auf einer mit dem Rahmen (3) einstückigen ortsfesten Konstruktion (20) schwenkbar montiert ist, wobei das andere Ende des Arms unter der Wirkung von einstellbaren Federmitteln (23) zum Trommelumfang vorgespannt ist.

4. Pflückmaschine nach Anspruch 3, welche weiters für jede Konstruktion (20) eine Rolle (25) umfaßt, die verstellbar auf dem Arm (20a) und, in der Drehrichtung der Trommel (5) gesehen, oberhalb der Schneide (18) gelagert ist, wobei die Rolle mit dem äußeren Gegenschneidbalken (18) vor Ineingriffkommen desselben mit der Schneide (22) in Eingriff gelangt, wodurch letztere gestützt und unter der Vorspannung der Federmittel (23) für den Schneidvorgang richtig positioniert wird.

5. Pflückmaschine nach Anspruch 2, worin die Arme (30) an den Innenflanschen (13) zueinanderschauende Paare von gegenüberliegenden Laschen (30a, 30b) auf jeder Seite des zugehörigen Flansches angesetzte bzw. an den äußeren Flanschen (13') einfache Laschen (30') angrenzend an die Innenseite des zugehörigen Flansches umfassen, wobei die Doppel- und Einfachlaschen alle schwenkbar auf dem jeweiligen Flansch (13, 13') an ausgerichteten Stellen (31) befestigt sind und so eine zur zentralen Welle (9) parallellaufende Oszillationsachse bilden, wobei ein bogenförmiger Schlitz (34, 36) in jedem Flansch (13, 13') als Aufnahme für die Oszillation vorgesehen ist.

6. Pflückmaschine nach Anspruch 5, worin sich jede äußere Lasche (30') mit einer bestimmten Länge über die Achse (31) hinaus zur Trommelrotationsachse radial erstreckt, sich in einem nach außen gebogenen ellbogenförmigen Ende (37) fortsetzt, welches zum Ineingriffkommen mit einem mit dem Rahmen (3) einstückigen Anschlag (38) bei jeder vollständigen Umdrehung der Trommel (5) ausgelegt ist, um die einheitliche Rotation sämtlicher Arme (30) gegenüber den zugeordneten Flanschen und in der Folge des Gegenkammbalkens (29) zu bewirken, wobei in der Zwischenzeit die Federmittel (35) zwecks Vorspannens des Systems von Armen (30) und Gegenkamm (29) zurück in die Ausgangsposition nach Außereingriffkommen der Armenden (37) aus den Anschlägen (38) belastet sind.

7. Pflückmaschine nach Anspruch 6, worin eine der Oberflächen des Armendes (37) und des Anschlags (38), welche für den gegenseitigen Eingriff ausgelegt sind, nockenförmig mit variablem Krümmungsradius ist, wobei die andere Oberfläche vollkommen zylindrisch ist.

8. Pflückmaschine nach Anspruch 1, worin die Zähne (17a) jedes Kammittels (17), welche alle parallel zueinander sind, von dem durch den Umfang der Trommel (5) beschriebenen Umkreis um einen Winkel (x) von weniger als 15° nach innen abgewinkelt sind.

9. Pflückmaschine nach Anspruch 2, worin jeder Zahn (29a) jedes Gegenkamms (29), dessen Balken mittels je einer Platte (32) pro Flansch (13) mit den Armen (30) integral verbunden sind, mit dem entsprechenden Arm (30) einen Winkel (ß) von etwa 20 bis 25° einschließt.

10. Pflückmaschine nach einem oder mehreren der vorhergehenden Ansprüche, worin Schneiden (22) jedes Schneidmittels, die im wesentlichen zur Mittelfronterzeugenden des vom Umfang der Trommel (5) gebildeten Zylinders gewendet positioniert sind, alle im selben Winkel in einer vertikalen Ebene geneigt sind, um bei Reibung an der Gegenschneide (18) eine Schneidwirkung gemäß einer Schere zu ermöglichen.

11. Pflückmaschine nach Anspruch 10, worin die Schneiden (22) jeweils von einer mit einer einstellbaren Neigung zur vertikalen Ebene am Arm (20a) befestigten Dreieckslasche (19) gehalten sind.

12. Pflückmaschine nach Anspruch 1, worin jedes Sammelmittel (39) pro Abschnitt der Zylindertrommel (5) durch eine Platte gebildet ist, die an einer Seite am Balken (12) befestigt ist und sich über eine Länge nach innen erstreckt, worauf sie im rechten Winkel gebogen ist, bis sie auf den nächsten Balken (12) trifft, an dem das zweite Ende derselben befestigt ist, sodaß pro zwischen zwei nebeneinanderliegenden Flanschen (13) eingeschlossenem Trommelabschnitt eine durchgehende Reihe von im Querschnitt dreieckigen Behältern gebildet ist, die zum Einsammeln der von den Schermitteln abgeschnittenen und von den Gegenkammmitteln während der Rotation der Trommel (5) ausgeworfenen Blütenständen ausgelegt sind.

13. Pflückmaschine nach Anspruch 12 mit einem Behälterkörper (43), der auf dem Selbstantriebsmittel (10) angeordnet ist und mittels eines Hubförderbandes (42) gefüllt wird, welches wiederum zur Aufnahme des von den Mitteln (39) auf ein Förderband (40) fallenden gesammelten Produkts ausgelegt ist.

*Fig.1*

*Fig.2*

*Fig.3*

EP 0 256 994 B1

Fig.4

Fig.4a

Fig.5

*Fig.6*

*Fig.8*

*Fig.7*